# EUROPEAN PATENT APPLICATION

(11) **EP 4 289 713 A1**
(43) Date of publication of application: **13.12.2023**
(21) Application number: 22177811.1
(22) Date of filing: 08.06.2022
(51) Int. Cl.: B62K 25/08, B62L 1/00

(54) **FRONT SUSPENSION OF A SINGLE-TRACK VEHICLE WITH PROGRESSIVE SUSPENSION**

(71) Applicant: Juris, Roman, 919 27 Dolne Lovcice (SK)
(72) Inventor: Juris, Roman, 919 27 Dolne Lovcice (SK)
(74) Representative: Majlingová, Zuzana

(57) **Abstract**

The invention relates to the front fork assembly of a single-track vehicle with a progressive suspension comprising a telescopic spring unit (1) comprising a tube (2), a slider (3) inserted in the tube (2) in a sliding manner, and a foot (4) of the front wheel (5), where: the foot (4) is firmly connected to the slider (3) and the tube (2) is equipped with a bottom brace (6), where the combination of the tube (2) and the bottom brace (6) represents the top element, or the foot (4) is firmly connected to the tube (2) and the slider (3) is equipped with the bottom brace (6) and the combination of the slider (3) and the bottom brace (6) represents the top element, where the suspension further comprises a rocker arm (7) comprising the first joint (7.1) for a firm connection with an axle (8) of the front wheel (5), the central pivot joint (7.2) and the second pivot joint (7.3); where the rocker arm (7) is pivotally connected to the foot (4) via the central pivot joint (7.2); the swivel segment (9) comprising the third, fourth and fifth pivot joint (9.1, 9.2, 9.3) arranged at the vertices of a triangle, where the swivel segment (9) is pivotally connected to the foot (4) via the third pivot joint (9.1); the first strut (10) pivotally connected at the one end to the rocker arm (7) via the second rotary joint (7.3) and at the other end pivotally connected to the swivel segment (9) via the fourth pivot joint (9.2); the second strut (11) pivotally connected at the one end to the swivel segment (9) via the fifth pivot joint (9.3) and at the other end pivotally connected to the top element via the bottom brace (6) or via the tube (2) or via the slider (3); and the brake calliper (12) mounted on the rocker arm (7) between the central pivot joint (7.2) and the second pivot joint (7.3).

## Description

### Technical Field

The invention relates to a front fork assembly of a telescopic type of single-track vehicle with progressive suspension of telescopic spring units. The invention falls within the field of engineering and transport.

### Background Art

A telescopic fork is used for the suspension of the front forks, especially for single-track vehicles. A classic telescopic fork was used especially in the past and is gradually being replaced by a more modern inverted fork commonly known as the USD (Up Side Down). In the case of this type of fork, the suspension is linear; to a very small extent, the progressiveness of the suspension is possible by mounting progressively wound springs. The disadvantage of these forks is the small degree of progressivity, shortening the wheelbase during suspension and the fork's "diving" during braking.

EP3541695B1 discloses a front fork assembly comprising a foot associated to sheath or to stem that pivotally supports a wheel spindle of an associable front wheel. The associable front wheel is provided with braking device comprises a support pivotally mounted with respect to the wheel spindle. Between support of the braking device and foot of suspension are interposed transfer means of the braking force, exerted by the braking device. The transfer means comprise a cam hinged to foot in a first hinge point. The cam is kinematically connected to the braking device and is mechanically connected to a portion of the suspension integral with the sheath or the stem that does not support foot. Advantage of the solution is only anti-dive effect for vehicles equipped with a front fork assembly of the telescopic type. This document does not solve progressive suspension or forwarding of forward wheel.

The principle of the present invention is aimed at achieving progressive suspension for telescopic forks, at eliminating the "diving" of the fork during braking, and at achieving the greatest possible maintenance of the constant wheelbase during suspension for motorcycles and bicycles.

### Summary of the Invention

The objective of the present invention has been achieved by the construction of the front fork assembly of a single-track vehicle with progressive suspension which comprises:
- telescopic spring unit containing the tube, a slider mounted in the tube in a sliding manner, and the foot of the front wheel where:
   ∘ the foot is firmly connected to the slider and the tube is equipped with a bottom brace, where the combination of the tube and the bottom brace represents the top element; or
   ∘ the foot is firmly connected to the tube and the slider is equipped with a bottom brace and the combination of slider and bottom brace represents the top element; and
- a rocker arm containing on the first arm the first joint for fixed connection to the front wheel axle where the rocker arm further contains a central pivot joint formed in the balance portion of the rocker arm and the second pivot joint formed on the second arm of the rocker arm where the rocker arm is pivotally connected to the foot via the central pivot joint;
- the swivel segment comprises a third, fourth and fifth pivot joints arranged at the vertices of the triangle, where the swivel segment is pivotally connected to the foot via the third pivot joint;
- the first strut pivotally connected at the one end to the rocker arm via the second pivot joint and at the other end pivotally connected to the swivel segment via the fourth pivot joint;
- the second strut pivotally connected at one end to the swivel segment via the fifth pivot joint and at the other end pivotally connected to the top element via the bottom brace or via the tube or the slider;
- the brake calliper mounted on the rocker arm between the central pivot joint and the second pivot joint.

According to a preferred embodiment, the central pivot joint, the second pivot joint, the third pivot joint, the fourth pivot joint, and the fifth pivot joint are a pivot pin, or optionally provided with a needle bearing or a sliding sheath.

According to another preferred embodiment, the first strut and/or the second strut are length-adjustable, preferably by means of a threaded joint. The threaded joint consists of a nut equipped with a clockwise thread on one side and an anticlockwise thread on the other side, thus enabling precise adjustment of the length of the second strut.

According to another preferred embodiment, the foot comprises the first bracket and the swivel segment is pivotally connected to the first bracket via the third pivot joint.

According to another preferred embodiment, the first bracket may be integrated with the foot or may be attached to the foot in the form of a slide-adjustable socket.

According to another preferred embodiment, the top element may comprise the second bracket and the other end of the second strut may be pivotally connected to the second bracket.

According to another preferred embodiment, the second bracket can be integrated with the top element or can be attached to the top element in the form of a slide-adjustable socket.

According to another embodiment, the first joint, the central pivot joint, and the second pivot joint of the rocker arm may be arranged in a straight line in the mentioned order or may preferably be arranged at the vertices of a triangle.

The rocker arm and the swivel segment can preferably be arranged in parallel planes.

It is known that the front fork's "diving" significantly impairs the driving characteristics of motorcycles in particular, but also bicycles. This disadvantage has been eliminated in the suspension according to the invention by firm mounting of the brake calliper on the rocker arm, and during braking the brake force absorber is transmitted via the first strut, the swivel segment and the second strut through to the tube bracket. Due to the fact that it is a fixed system, this construction does not allow the slider to be slid into the tube and thus eliminates the front fork's "diving" while braking.

It is known that the shortening of the wheelbase impairs the driving characteristics of a motorcycle, but also of a bicycle. The disadvantage has been eliminated by the design of the front fork assembly as described above. The force exerted by passing over an obstacle will cause the rocker arm to rotate around the central pivot joint in a clockwise direction. This rotation will cause the "forwarding" of the front, thus eliminating the shortening of the wheelbase caused by the slider sliding into the tube.

### Brief Description of Drawings

Fig. 1 shows a diagram of the front fork assembly according to the invention with the front wheel before passing over an obstacle.
Fig. 2 shows a diagram of the front fork assembly according to the invention with the front wheel passing over an obstacle.
Fig. 3 shows a diagram of the front fork assembly according to the invention with the second strut equipped with the threaded joint, where the second strut is connected to the bottom brace.

### Detailed Description

### Example 1

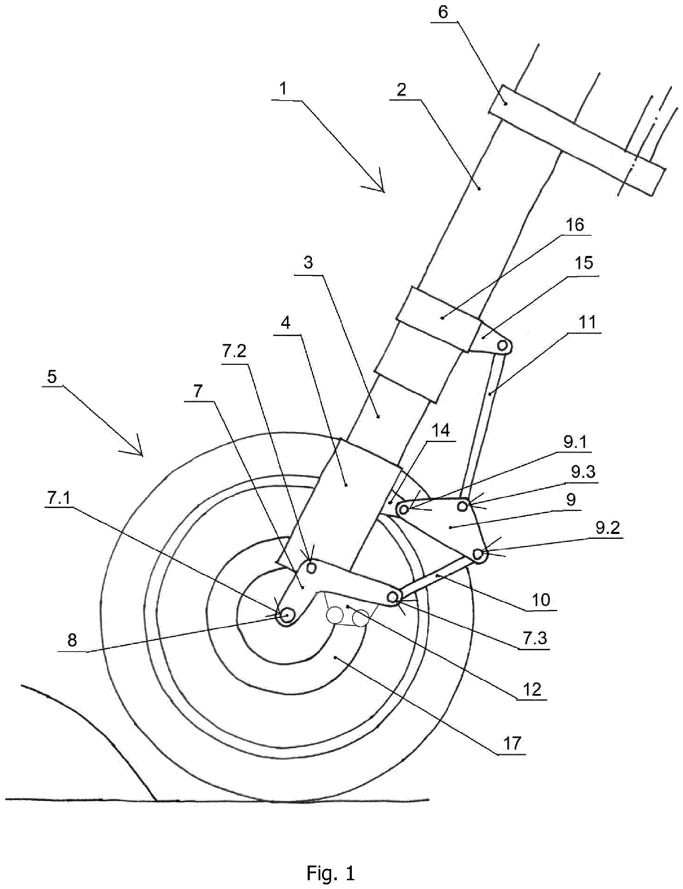

The front fork assembly of a motorcycle with a front wheel 5, shown in Fig. 1, comprises a telescopic spring unit 1, which comprises a tube 2 equipped with the bottom brace 6. The slider 3 is mounted in the tube 2 in a sliding manner and the foot 4 of the front wheel 5 is firmly connected to the slider 3. The front fork assembly further comprises a rocker arm 7, which is firmly connected via the first joint 7.1 to the axle 8 of the front wheel 5. The rocker arm 7 is pivotally connected to the foot 4 by means of the central pivot joint 7.2 in the form of a pin. The first strut 10 is pivotally connected to the rocker arm 7 at the one end by means of the second pivot joint 7.3, in the form of a pin. The other end of the first strut 10 is pivotally connected to the swivel segment 9 via the fourth pivot joint 9.2, in the form of a pin. The swivel segment 9 is pivotally connected to the first bracket 14 via the third pivot joint 9.1, in the form of a pin, and the first bracket 14 is integrated with the foot 4. The second strut 11 is attached at the one end to the swivel segment 9 via the fifth pivot joint 9.3, in the form of a pin. The other end of the second strut 11 is pivotally attached to the second bracket 15 by means of a pin. The second bracket 15 is attached to the tube 2 in the form of a slide-adjustable socket 16. The front wheel 5 further comprises a brake disc 17. The brake calliper 12 is firmly connected to the rocker arm 7 between the central pivot joint 7.2 and the second pivot joint 7.3.

### Example 2

An alternative front fork assembly construction (not shown) includes an inverted telescopic spring unit where the tube is firmly connected to the front wheel foot. The slider is equipped with the firmly attached bottom brace, and together they form the top element. This construction is usually referred to as USD (up-side-down).

### Example 3

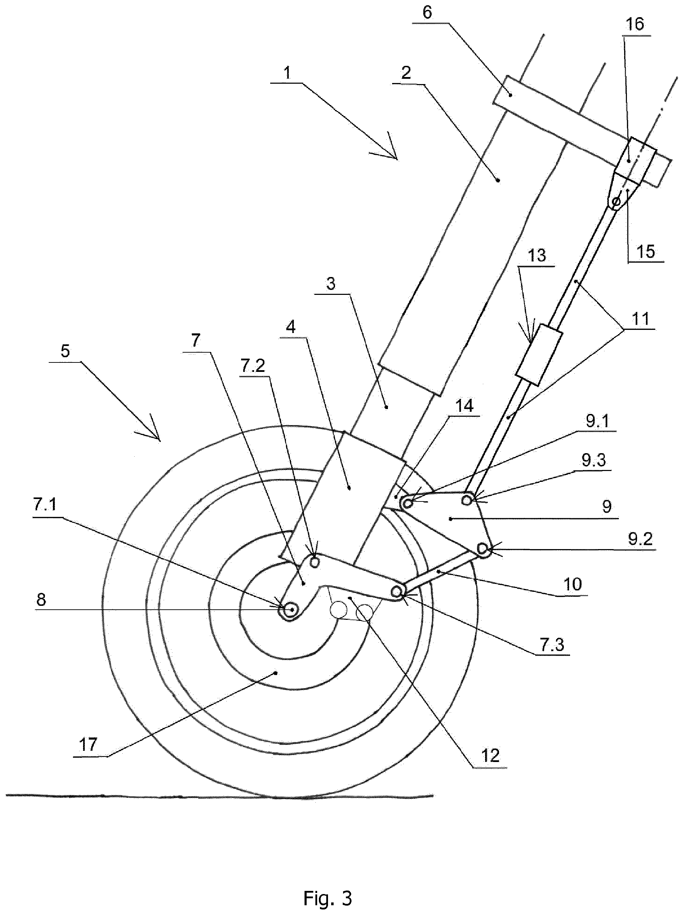

Fig. 3 shows the construction of the front fork assembly as shown in Fig. 1 and described in Example 1, with the difference that the other end of the second strut 11 is pivotally connected to the bottom brace 6 by means of the second bracket 15 and the slide-adjustable socket 16, and the bottom brace 6 is firmly connected to the tube 2, and together they form the top element. The second strut 11 is length-adjustable by means of the threaded joint 13. The second strut consists of two parts, which are connected by a nut equipped with a clockwise and an anticlockwise thread.

### Example 4

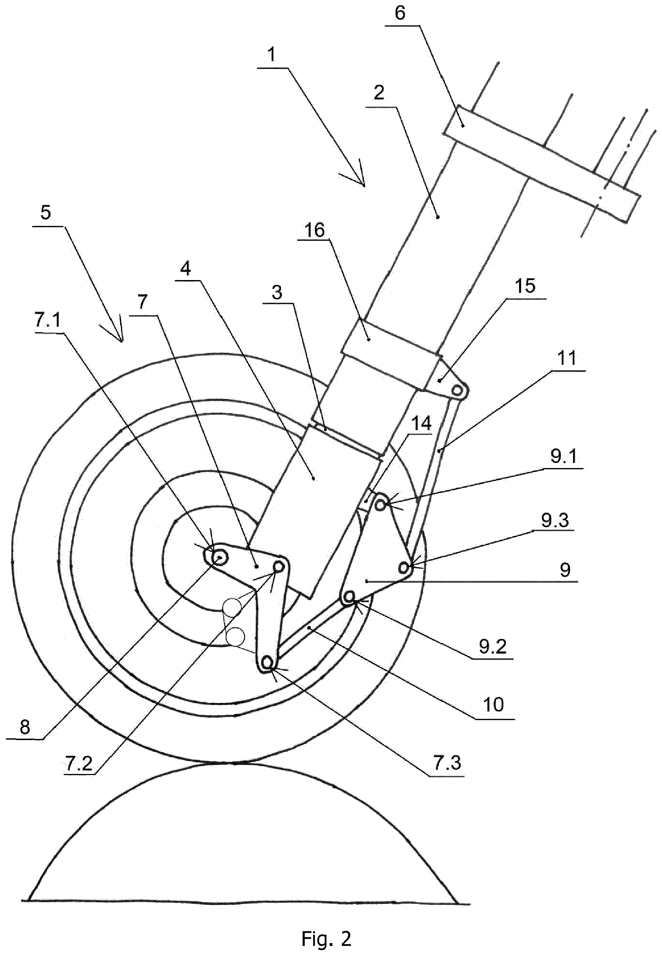

Fig. 2 shows the front fork assembly with the front wheel 5, of the construction as described in Example 1, when passing over an obstacle.

Compared to Fig. 1, the front wheel 5 is shifted forward and upward when passing over an obstacle. The force evoked by passing over the obstacle that is acting on the front wheel 5 is transmitted through the rocker arm 7 to the first strut 10, which transmits the force through the swivel segment 9 and further through the second strut 11 to the second bracket 15. This force causes the rocker arm 7 to rotate around the central pivot joint 7.2 clockwise. This movement is transmitted through the first strut 10 and causes the rotation of swivel segment 9 around the third rotary joint 9.1 clockwise. Furthermore, this movement is transmitted via the second strut 11 to the second bracket 15 and the tube 2. Given that the tube 2 and the second bracket 14, firmly attached to the tube 2, represent a fixed point in terms of springing, the slider 3 is progressively pushed into the tube 2.

Rotation of the rocker arm 7 around the central pivot joint 7.2 clockwise will cause the wheel 5 (first joint 7.1) to "forward", thus eliminating the shortening of the wheelbase which is caused by the slider's sliding 3 into the tube 2. The shortening of the wheelbase impairs the driving characteristics of a motorcycle in particular, but also that of a bicycle.

### Example 5

Fig. 3 shows the front fork assembly with the front wheel 2, of the construction as described in Example 1, during braking.

When braking, as shown in Fig. 1 for instance, the brake force absorber is transmitted through the first strut 10, the swivel segment 9, the second strut 11, and the second bracket 15 of the tube 2. Due to the fact that it is a fixed system, the slider 3 is not slid into the tube 2, thus eliminating the front fork's "diving" while braking. It is generally known that the fork's "diving" significantly impairs the driving characteristics of motorcycles in particular, but also that of bicycles.

### Industrial applicability

The invention can be used on all means of transport using telescopic suspension.

The progressive suspension system of the front USD telescopic fork can also be used with the front telescopic forks for all types of motorcycles, bicycles, and also trailing arms suspended by telescopic shock absorbers, e.g., trailers, military equipment or landing gear.

### Reference signs:

- 1: telescopic spring unit
- 2: tube
- 3: slider
- 4: foot
- 5: front wheel
- 6: bottom brace
- 7: rocker arm
- 7.1: first joint
- 7.2: central pivot joint
- 7.3: second pivot joint
- 8: front wheel axle
- 9: swivel segment
- 9.1: third pivot joint
- 9.2: fourth pivot joint
- 9.3: fifth pivot joint
- 10: first strut
- 11: second strut
- 12: brake calliper
- 13: threaded joint
- 14: first bracket
- 15: second bracket
- 16: slide-adjustable socket of top element
- 17: brake disc

## Claims

1. A front fork assembly of a single-track vehicle with progressive suspension, comprising:
- a telescopic spring unit (1) comprising a tube (2), a slider (3) mounted in the tube (2) in a sliding manner, and a foot (4) of a front wheel (5), where:
∘ the foot (4) is firmly connected to the slider (3), and the tube (2) is equipped with a bottom brace (6), where the combination of the tube (2) and the bottom brace (6) represents the top element; or
∘ the foot (4) is firmly connected to the tube (2) and the slider (3) is equipped with the bottom brace (6) and the combination of the slider (3) and the bottom brace (6) represents the top element,
**characterised in that** it further comprises:
- a rocker arm (7) comprising the first joint (7.1) for the firm connection to an axle (8) of the front wheel (5), a central pivot joint (7.2), and a second pivot joint (7.3); where the rocker arm (7) is pivotally connected to the foot (4) via the central pivot joint (7.2);
- a swivel segment (9), which comprises third, fourth and fifth pivot joints (9.1, 9.2, 9.3) arranged at the vertices of the triangle, where the swivel segment (9) is pivotally connected to the foot (4) via the third pivot joint (9.1);
- a first strut (10) pivotally connected at the one end to the rocker arm (7) via the second pivot joint (7.3) and at the other end pivotally connected to the swivel segment (9) via the fourth pivot joint (9.2);
- a second strut (11) pivotally connected at the one end to the swivel segment (9) via the fifth pivot joint (9.3) and at the other end pivotally connected to the top element via the bottom brace (6) or via the tube (2) or via the slider (3); and
- a brake calliper (12) mounted on the rocker arm (7) between the central pivot joint (7.2) and the second pivot joint (7.3).

2. The front fork assembly according to claim 1, **characterised in that** the central pivot joint (7.2), the second pivot joint (7.3), the third pivot joint (9.1), and the fourth pivot joint (9.2), and the fifth pivot joint (9.3) is the pivot pin, optionally equipped with a needle bearing or a sliding sheath.

3. The front fork assembly according to any one of the preceding claims **characterised in that** the first strut (10) and/or the second strut (11) are length-adjustable, preferably by means of a threaded joint (13).

4. The front fork assembly according to any one of the preceding claims, **characterised in that** the foot (4) comprises a first bracket (14) and the swivel segment (9) is pivotally connected to the first bracket (14) via the third pivot joint (9.1).

5. The front assembly according to claim 4, **characterised in that** the first bracket (14) is integrated with the foot (4) or is attached to the foot (4) in the form of a slide-adjustable socket.

6. The front fork assembly according to any one of the preceding claims, **characterised in that** the top element comprises a second bracket (15) and the second end of the second strut (11), is pivotally connected to the second bracket (15).

7. The front fork assembly according to claim 6, **characterised in that** the second bracket (15) is integrated with the top element or is attached to the top element in the form of a slide-adjustable socket (16).

8. The front fork assembly according to any one of the preceding claims, **characterised in that** the first joint (7.1), the central pivot joint (7.2), and the second pivot joint (7.3) of the rocker arm (7) are arranged in a straight line in the given order.

9. The front fork assembly according to any one of the preceding claims, **characterised in that** the first joint (7.1), the central pivot joint (7.2), and the second pivot joint (7.3) of the rocker arm (7) are arranged to form the vertices of a triangle.

10. The front fork assembly according to any one of the preceding claims, **characterised in that** the rocker arm (7) and the swivel segment (9) are arranged in parallel planes.

## Amended claims

### Amended claims in accordance with Rule 137(2) EPC.

1. A front fork assembly of a single-track vehicle with progressive suspension, comprising:
- a telescopic spring unit (1) comprising a tube (2), a slider (3) mounted in the tube (2) in a sliding manner, and a foot (4) of a front wheel (5), where:
∘ the foot (4) is firmly connected to the slider (3), and the tube (2) is equipped with a bottom brace (6), where the combination of the tube (2) and the bottom brace (6) represents the top element; or
∘ the foot (4) is firmly connected to the tube (2) and the slider (3) is equipped with the bottom brace (6) and the combination of the slider (3) and the bottom brace (6) represents the top element;
- a rocker arm (7) comprising a first joint (7.1) for the firm connection to an axle (8) of the front wheel (5), a central pivot joint (7.2), and a second pivot joint (7.3); where the rocker arm (7) is pivotally connected to the foot (4) via the central pivot joint (7.2);
- a brake calliper (12) mounted on the rocker arm (7) between the central pivot joint (7.2) and the second pivot joint (7.3),
**characterised in that** it further comprises:
- a swivel segment (9), which comprises third, fourth and fifth pivot joints (9.1, 9.2, 9.3) arranged at the vertices of a triangle, where the swivel segment (9) is pivotally connected to the foot (4) via the third pivot joint (9.1);
- a first strut (10) pivotally connected at the one end to the rocker arm (7) via the second pivot joint (7.3) and at the other end pivotally connected to the swivel segment (9) via the fourth pivot joint (9.2);
- a second strut (11) pivotally connected at the one end to the swivel segment (9) via the fifth pivot joint (9.3) and at the other end pivotally connected to the top element via the bottom brace (6) or via the tube (2) or via the slider (3).

2. The front fork assembly according to claim 1, **characterised in that** the central pivot joint (7.2), the second pivot joint (7.3), the third pivot joint (9.1), and the fourth pivot joint (9.2), and the fifth pivot joint (9.3) is a pivot pin, optionally equipped with a needle bearing or a sliding sheath.

3. The front fork assembly according to any one of the preceding claims **characterised in that** the first strut (10) and/or the second strut (11) are length-adjustable, preferably by means of a threaded joint (13).

4. The front fork assembly according to any one of the preceding claims, **characterised in that** the foot (4) comprises a first bracket (14) and the swivel segment (9) is pivotally connected to the first bracket (14) via the third pivot joint (9.1).

5. The front fork assembly according to claim 4, **characterised in that** the first bracket (14) is integrated with the foot (4) or is attached to the foot (4) in the form of a slide-adjustable socket.

6. The front fork assembly according to any one of the preceding claims, **characterised in that** the top element comprises a second bracket (15) and the second end of the second strut (11), is pivotally connected to the second bracket (15).

7. The front fork assembly according to claim 6, **characterised in that** the second bracket (15) is integrated with the top element or is attached to the top element in the form of a slide-adjustable socket (16).

8. The front fork assembly according to any one of the preceding claims, **characterised in that** the first joint (7.1), the central pivot joint (7.2), and the second pivot joint (7.3) of the rocker arm (7) are arranged in a straight line in the given order.

9. The front fork assembly according to any one of claims 1 to 7, **characterised in that** the first joint (7.1), the central pivot joint (7.2), and the second pivot joint (7.3) of the rocker arm (7) are arranged to form the vertices of a triangle.

10. The front fork assembly according to any one of the preceding claims, **characterised in that** the rocker arm (7) and the swivel segment (9) are arranged in parallel planes.
